# EUROPEAN PATENT SPECIFICATION

(11) **EP 3 473 360 B1**
(45) Date of publication and mention of the grant of the patent: **10.08.2022**
(21) Application number: 18201387.0
(22) Date of filing: 19.10.2018
(51) Int. Cl.: B22F 10/28, B22F 10/73, B22F 12/70, B29C 64/153, B29C 64/35, B29C 64/371, B33Y 10/00, B33Y 30/00, B33Y 40/00

(54) **POWDER BED FUSION APPARATUS**
PULVERBETTFUSIONSVORRICHTUNG
APPAREIL DE FUSION À LIT DE POUDRE

(30) Priority: 23.10.2017 EP 17197696
(43) Date of publication of application: 24.04.2019
(73) Proprietor: Renishaw PLC, Wotton-under-Edge, Gloucestershire GL12 8JR (GB)
(72) Inventor: BEEBY, David Edward, Wotton-under-Edge, Gloucestershire GL12 8JR (GB); WHITTON, David John, Wotton-under-Edge, Gloucesteshire GL12 8JR (GB); CRITCHLEY, Andrew, Thomas, Wotton-under-Edge, Gloucestershire (GB)
(74) Representative: Matthews, Paul

(56) References cited:
- EP-A1- 2 862 651
- EP-A1- 3 431 258
- WO-A1-2019/017956
- WO-A2-2016/079494
- DE-A1-102015 222 689
- US-A1- 2010 044 547
- US-A1- 2016 193 696
- US-A1- 2017 120 538

## Description

### Field of Invention

This invention concerns powder bed fusion apparatus and, in particular, but not exclusively, powder bed fusion apparatus in which a laser is used to consolidate powder of a powder bed in a controlled, typically inert, atmosphere.

### Background

Powder bed fusion apparatus produce objects through layer-by-layer solidification of a material, such as a metal powder material, using a high energy beam, such as a laser or electron beam. A powder layer is formed across a powder bed contained in a build sleeve by lowering a build platform to lower the powder bed, depositing a heap of powder adjacent to the lowered powder bed and spreading the heap of powder with a wiper across (from one side to another side of) the powder bed to form the layer. Portions of the powder layer corresponding to a cross-section of the workpiece to be formed are then solidified through irradiating these areas with the beam. The beam melts or sinters the powder to form a solidified layer. After selective solidification of a layer, the powder bed is lowered by a thickness of the newly solidified layer and a further layer of powder is spread over the surface and solidified, as required. An example of such a device is disclosed in US6042774.

A problem posed by such devices is how to recover powder that is not consolidated for a subsequent build. There are three sources of unconsolidated powder from a build. First, the impact of the laser with the powder bed can cause powder to be ejected from the powder bed. Typically, a gas knife is provided across the powder bed and at least some of this ejected powder is carried away by the gas knife to a gas exhaust. Secondly, to form each layer it is usual to dose more than the required amount of powder to form a layer (a "better safe than sorry" approach). However, this leads to the presence of excess powder at the end of each layer formation. Typically, this excess powder is pushed into a powder overflow channel and collected in a container. The excess powder can amount to a significant proportion of the total powder used for a build. The third source of unconsolidated powder is unconsolidated powder of the powder bed, which is recovered at the end of the build in a de-building process.

In Renishaw's RenAM^{™} 500 machine, the unconsolidated powder of the powder bed is recovered by raising the build platform and pushing the unconsolidated powder into the overflow channel. This powder together with the excess powder collects in a lower hopper. A pneumatic powder transport mechanism is provided to transport the powder from the lower hopper to an upper hopper for further dispense into the build chamber.

EP 2 992 942 A1 discloses an apparatus comprising a cyclone separator for removing particulate impurities from the gas stream. The cyclone separator is used to reduce the particle load of the gas stream supplied to a downstream filter system. A majority of raw material powder present in the gas stream can be removed using the cyclone separator. The downstream filter system then can be operated to mainly filter process emissions such as, for example, welding spatter and nanoparticles formed by vaporisation of the powder material.

DE 10 2015 213 165 A1 discloses an apparatus comprising a protective gas recovery device comprising a centrifugal separator for separating particles out of the gas stream. The protective gas recovery device can be connected to a powder recovery device in the manner shown in in EP 2 052 845 A2. EP 2 052 845 A2 discloses using an exhaust of a protective gas circuit for extraction of any smoke that may occur during the construction process. The exhaust can be manually guided close to the powder at the end of the construction process to suck powder from the process space. The powder recovery device may comprise, instead of a collecting container, a powder conveyor system, which feeds the powder back to the process space or the corresponding discharge device. The powder conveying system may be a conveyor screw.

WO2016/079494 A2 discloses an additive manufacturing apparatus comprising a build chamber and a gas line for transporting powder recovered from the build chamber into a collection hopper to a separator, from which the powder is delivered back into a dispense hopper located in the build chamber for use in the formation of further layers. The apparatus further comprises a powder overflow that delivers powder pushed into the overflow by the wiper, during formation of a layer and/or recovered from the powder bed, to the collection hopper. Powder from the collection hopper is delivered into the gas line via a screw-feeder. US2017/0120538 A1 discloses an apparatus for collecting powdered material after a print job in powder bed fusion manufacturing. The apparatus comprises a build platform capable of a rotation, a tilt or an inversion for dumping powder in to a hopper below the build platform. Powders collected in the hopper may be carried to one or more storage containers by an auger and/or conveyor in combination with a vacuum.

US2016/0193696 A1 discloses an additive manufacturing apparatus comprising a recirculation loop for recirculating powder material that is not used to build the object back to a storage hopper. The recirculation loop is in gaseous communication with the build chamber such that the build chamber and the recirculation loop share a common inert atmosphere. At either end of a build chamber in a direction that a wiper moves are chutes for collecting powder material that is wiped from the working area. The chutes channel the powder into a collection hopper of the recirculation loop.

DE102015222689 A1 discloses a selective laser melting apparatus comprising a powder exchange module for transporting powder received by a powder outlet to a powder inlet of the process chamber. The powder outlet is connected to a collecting container. The output from the collecting container opens to a screw conveyor for feeding the powder to a gas flow conveyor. The gas flow conveyor comprises a gas circulation and a cyclone. Powder separated form the gas flow by the cyclone passes via an intermediate tank and screw conveyor to the powder inlet. US2010/0044547 A1 discloses a method of producing a three-dimensionally shaped object, wherein at least part of the ambient gas in the chamber is exhausted from the chamber through a gas passage in a shaping tank. A unit (e.g. a filter) that allows only a gaseous material to pass therethrough is provided in the gas passages so that the powder contained in a shaping tank should not be dropped or sucked through the gas passages.

EP2862651 A1 discloses an apparatus for producing three-dimensional work pieces by selective laser melting. The apparatus comprises a process chamber sealable against the ambient atmosphere. Fresh gas is supplied to the process chamber by a gas inlet system and gas containing impurities is discharged from the process chamber by means of a gas outlet system.

EP3431258 A1 discloses an apparatus for additively manufacturing of three-dimensional objects. The apparatus comprises a stream generating unit configured to generate a stream of a process gas being capable of being charged with particles and a filter unit configured to separate particles from the stream of process gas. The separated particles fall down due to gravity and come into contact with a surface of a particle guide element that guides the particles to a particle outlet. The particle outlet is connected to a particle inlet of a particle reception chamber.

WO2019/017956 A1 discloses a selective solidification device comprising a fresh build material cartridge and a recycled build material cartridge. Recycled material cartridge can house recycled build material that feeds one of two recycled material storage devices. The other recycled material storage device can be fed directly from the build processing device and material separating and conditioning device.

### Summary of Invention

According to the invention there is provided a powder bed fusion apparatus according to claim 1.

The exhaust channel or opening located at or below the working plane may be for receiving powder wiped from the powder bed and/or build platform by a wiper or a brush.

The exhaust may comprise an exhaust channel or opening located in the build chamber for receiving powder displaced from the powder bed. In one embodiment, the exhaust channel or opening may be located for receiving powder conveyed by mechanical means from the powder bed and/or build platform.

The channel or opening exhaust may be located such that powder displaced from the powder bed falls and/or flows into the exhaust channel or opening.

The exhaust channel or opening may be located to receive powder conveyed along a surface, such as a surface of the powder bed and/or a surface surrounding the powder bed.

In this way, powder, such as excess powder dosed during layer formation or powder of the powder bed recovered during a de-build of the object can be recovered to the gas circuit without having to move the exhaust. In this regard, the exhaust channel or opening may have a fixed location in the build chamber. The powder does not need to be lifted for recovery into the exhaust.

The apparatus may comprise non-pneumatic means, for example, mechanical means, for conveying the powder to the exhaust channel or opening. For example, the layer formation device may comprise a wiper for spreading each layer and the exhaust channel or opening may be located such that the wiper pushes the powder (excess powder or powder recovered during a de-build) into the exhaust channel or opening. The wiper may move in a direction perpendicular to the gas flow through the build chamber. The at least one exhaust channel or opening may be located to be on a side of the powder bed to which the wiper pushes the powder. The exhaust may comprise two exhaust channels or openings (a first exhaust channel or opening and second exhaust channel or opening) one either side of the powder bed.

Other non-pneumatic means may be provided for conveying the powder to the exhaust, such as a vibration device, as described above.

The exhaust may be arranged such that a significant proportion, if not a majority or substantially all, of the powder displaced from the powder bed that is not entrained in the gas flow is conveyed to the exhaust by the non-pneumatic means.

A bottom of the exhaust channel may be angled relative to the horizontal such that powder flows along the exhaust channel to be carried away by the gas flow in the gas circuit. The angle may be greater than an angle of repose of the powder.

Powder dosed in a controlled manner from the hopper is formed into the layers for example by being spread by a wiper. The hopper may be arranged to dose powder into the build chamber from above the working plane and powder is conveyed from the exhaust up to the separator by the gas flow. The gas flow acts, in the build chamber, as a gas knife for maintaining the atmosphere in the build chamber free from gas borne particles and, in the gas circuit, as a powder conveyor for conveying the powder to a location for subsequent dispense. Accordingly, a powder conveying system separate from the gas circuit for generating the gas knife may not be required.

The separator may comprise a cyclone separator. A cyclone separator has been found to be capable of separating a majority of micron sized powder from a gas flow, such as particles having a diameter of 10 microns or more. It is desirable to recover such micron sized particles for subsequent builds. It may be desirable that smaller particles, such as those below 10 microns, are separated from the larger particles. It has been found that smaller particles are not separated from the gas flow using a cyclone and remain entrained in the gas flow leaving the cyclone. The gas circuit may comprise a further filter, such as a mesh type filter, for separating these smaller particles from the gas flow.

The apparatus may comprise an end effector in the build volume to pick the object up and elevate it above the build platform. This may free powder from the object and allow the wiper or the operator to brush powder from the build platform during a de-build process. The mechanical manipulator may be capable of inverting the object above the build platform. This may facilitate the removal of powder from the object. The mechanical manipulator may be in accordance with the mechanical manipulator described in WO2018/154283.

The apparatus may comprise a collection hopper for collecting powder wiped from the powder bed and/or build platform into the exhaust. The collection hopper may comprise a gas outlet in an upper section thereof and a powder outlet below the gas outlet. A gas conduit may be connected to the gas outlet for transporting gas back to the nozzle. The powder outlet may be arranged to feed powder into the gas conduit such that the powder is entrained in the gas flow and transported to the separator. The powder outlet may comprise a valve for controlling the rate of powder flow into the gas conduit. The valve may be operated by a controller of the additive manufacturing apparatus, for example based on an upstream demand for powder or a blockage/back-up of powder detected upstream.

The powder bed fusion apparatus according to the invention may be used in a method comprising recirculating gas through the build chamber and, during recirculating of the gas, forming a layer of powder from a dose of powder, wherein excess powder of the dose is delivered into the gas flow to be carried to the separator by the gas flow in the gas circuit.

The powder bed fusion apparatus may be used in a method comprising recirculating gas through the build chamber and, during recirculation of the gas, breaking out the object from the powder bed, wherein powder of the powder bed is mechanically delivered to the exhaust channel or opening to be carried to the separator by the gas flow in the gas circuit.

In addition to a proportion of the powder being mechanically delivered to the exhaust channel or opening, the gas flow between the nozzle and exhaust during breaking out of the object from the powder bed may deliver powder to the exhaust. For example, the method may comprise increasing a velocity of the gas flow during breaking out the object from the powder bed. The increased velocity of gas flow may act to pick-up/blow powder from a surface of the apparatus and/or object and carry the powder to the exhaust. During the additive manufacturing process, it is desirable to keep the gas velocity below a threshold such that a significant quantity of powder is not picked-up/blown from the powder bed by the gas flow. However, during breaking out of the object, this limitation no longer applies and the gas velocity can be increased above this threshold. Accordingly, the gas flow can act as a jet to dislodge powder from the powder bed and/or object.

The methods may comprise transporting the powder using the gas flow in the gas circuit to the separator located above the working plane.

The powder fusion apparatus may comprise a powder transport system comprising a gas conduit pipe, a powder hopper and a feeding device for feeding powder from the powder hopper into the gas conduit pipe such that gas flow in the powder conduit transports the powder along the gas circuit, wherein the feeding device comprises a feeding tube that extends into the gas conduit pipe such that an outlet of the feeding tube is located spaced from a sidewall of the conduit pipe.

The collection hopper and feeding tube may be arranged to gravity feed the powder into the conduit pipe.

The outlet of the feeding tube may be arranged such that, without gas flow, powder builds-up in the conduit pipe below the outlet to block the outlet to further powder flow without blocking a full cross-section of the conduit pipe. In this way, gas is not prevented from flowing through the conduit pipe by the powder fed into the conduit pipe.

The powder fusion apparatus may comprise a device for controlling powder flow from a hopper comprising a feeding channel connected to the hopper such that powder can flow under gravity through the tube from the hopper, a lower member having a surface located below and spaced from the feeding channel for receiving powder exiting the feeding channel, the surface arranged such that powder can form a heap on the surface and, if not transported away, the heap will block an open end of the channel, and a transport device for generating a motive force for carrying away powder from the surface.

In this way, the device automatically controls the flow of powder from the hopper, based upon whether the motive force is carrying the powder away to maintain the channel unblocked.

The transport device may comprise a gas circuit comprising a pump for generating gas flow over the surface to transport the powder away for the surface. Alternatively, the transport device may comprise a vibrator, such as an ultrasonic vibrator, for vibrating the surface to cause the powder to flow across the surface to an outlet port.

The device may comprise a plurality of such feeding channels. The or each feeding channel may be provided in an upper member that is located above and spaced from the lower member. The lower member may comprise one or more outlets into which the powder to transported by the motive force. The outlets may be arranged such that gravity causes the powder to exit through the outlets once the powder has been transported to the outlets by the motive force.

### Description of the Drawings

**Figure 1** is a schematic view of a powder bed fusion apparatus according to an embodiment of the invention;
**Figure 2** is a perspective view of the powder bed fusion apparatus shown in Figure 1;
**Figure 3** is a schematic view of a powder bed fusion apparatus according to a further embodiment of the invention;
**Figure 4** is a perspective view of the powder bed fusion apparatus according to the further embodiment, wherein the build chamber door is omitted to show the inside of the build chamber;
**Figure 5** is a cross-sectional view of the powder bed fusion apparatus according to the further embodiment with arrows showing the general direction of gas flow in the build chamber;
**Figure 6** is a perspective view of an inside of a gas manifold/powder collection hopper of the powder bed fusion apparatus according to the further embodiment;
**Figure 7** is a perspective view of the powder bed fusion apparatus according to the further embodiment showing the inside of a gas manifold/powder collection hopper and part of the gas/powder transport circuit; and
**Figure 8** is a perspective view of feed pipe and control valve for feeding powder from the gas manifold/powder collection hopper into pipework of the gas/powder transport circuit.

### Description of Embodiments

Referring to the Figures, a powder bed fusion apparatus 101 according to one embodiment of the invention comprises a build platform 102 movable within a build sleeve 103 to define a build volume, a layer formation device for forming layers of powder across the build volume in a working plane and a scanner 106 for directing a laser beam through an optical window 107 and steering the laser beam across the working plane to selectively fuse the powder. Successive formation of powder layers forms a powder bed 123 in the build volume.

The layer formation device typically comprises a doser 108 for dosing powder and a wiper 109 for spreading the dosed powder into a layer. In this embodiment, the doser is a top-doser, which doses powder from a hopper 110 onto surface 104. The doser 108 may be in accordance with that disclosed in WO2010/007396. A lower edge of the wiper defines the working plane and is substantially aligned with the surface 104.

A build chamber 113 is provided for maintaining an inert atmosphere surrounding the working surface of the powder bed. The build chamber 113 may comprise an upper and lower chamber as described in WO2010/007394. A gas circuit 116 is in fluid communication with the build chamber 113 via gas nozzle 114 and gas exhaust 115. A pump 117 pumps gas around the circuit such that gas nozzle 114 propels gas into the build chamber 113 and gas exhaust 115 extracts gas from the build chamber 113 to generate a gas flow (so called "gas-knife") across the working plane. The gas circuit further comprises a separator 119 in the form of a cyclonic device for removing particles having a defined size, for example greater than 10 microns, from the gas flow and a fine mesh filter 120 for filtering particles having a size less than the defined size, for example the order of a few microns or less. Typically, particle size distributions for powder to be used in a metal powder bed fusion process will include particles between 10 and 100 microns and the cyclone separator 118 separates out particles having a size acceptable for a build from particles having a size below a lower size threshold for the build process.

The cyclone separator 119 is provided above the hopper 110 such that particles separated out from the gas flow by the cyclone separator 119 can fall into hopper 110. A sieve 121 is provided between the outlet from the separator 119 and the hopper 110, the mesh size of the sieve 121 selected such that particles below an upper size threshold fall therethrough into hopper 110 whilst particles larger than the upper size threshold migrate to an edge of the sieve 121 and fall into over-sized particle container 122. The particles returned to hopper 110 can then be re-dosed for the current or a subsequent build.

The powder bed fusion apparatus further comprises a mechanical manipulator 105 arranged to engage with a build substrate 102a, to which the object is attached, to tilt the object in a raised position above the working plane such that powder is freed from the object and deposited at a location above the working plane and into the build volume. The mechanical manipulator may be as described in WO2018/154283.

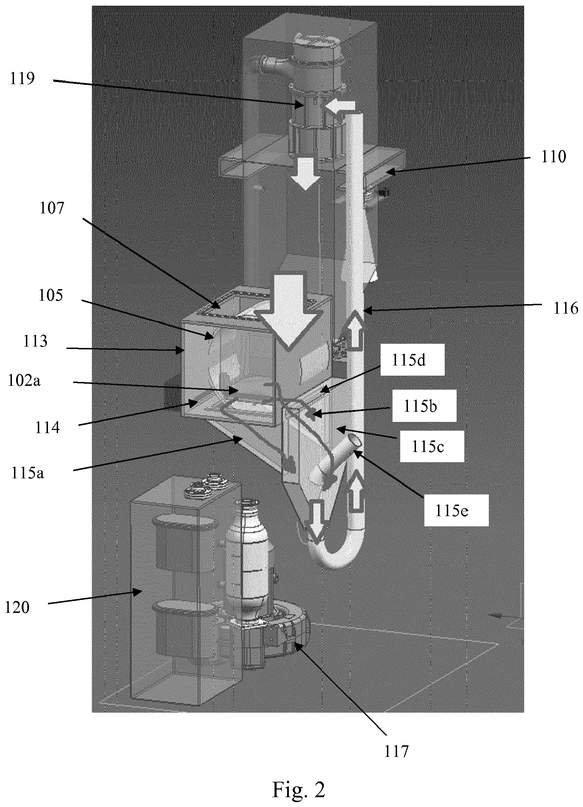

Figure 2 shows a preferred positioning for the elements of the powder bed fusion apparatus. The hopper 110, doser 108 and wiper 109 are arranged such that powder is spread across the powder bed 123 in a layer formation direction perpendicular to the gas knife generated by gas nozzle 114 and gas exhaust 115. In Figure 2 only some of the pipework of the gas circuit 116 is shown. Figure 2 also illustrates overflow channels 115a and 115b of the gas exhaust 115, which are located either side of the powder bed 123 in the layer formation direction. These channels open out into the build chamber 113 and excess powder that is left over after a formation of a layer is pushed into the channel(s) 115a, 115b by the wiper 109. A bottom of each channel 115a, 115b is at an angle to the horizontal that is greater than an angle of repose of the powder. In this way, powder that is pushed into the channels 115a, 115b flows to an exhaust manifold/powder collection hopper 115c. However, it is believed that gas bleeding down the exhaust channels 115a, 155b will facilitate the flow of powder along the channels 115a, 115b and, accordingly, shallower angles for the bottoms of the exhaust channels 115a, 115b may be acceptable.

The exhaust manifold/powder collection hopper 115c is also connected with the build chamber 113 via an opening 115d provided above the working plane such that the gas knife is generated across the working plane from the gas nozzle 114 to the opening 115d in the gas exhaust 115.

Also shown in Figure 2 is a build substrate 102a located above the working plane. Objects built in a powder bed fusion apparatus, particularly metal objects, are built on a build substrate 102a mounted on the build platform 102, as disclosed in US5753274. The mechanical manipulator 105 may be arranged to engage with the build substrate to lift the build substrate and the object connected thereto above the working plane, sufficient clearance being provided for the wiper 109 to travel underneath. Accordingly, on completion of a build, the mechanical manipulator 105 is rotated to locate engagement arms 105a, 105b such that raising of the object and the build substrate 102a to the position shown in Figure 2 causes the arms to engage with the build substrate 102a and secure the build substrate 102a to the mechanical manipulator 105. The build platform 102 is then lowered and further rotation of the mechanical manipulator 105 raises the build substrate 102a and the object 124 attached thereto to above the working plane. During this process, the object 124 is freed from the powder of the powder bed 123, this powder falling back into the build volume, on the surfaces around the build volume or into overflow channels 115a, 115b. Powder remaining in the build chamber 113 is then recovered by pushing the powder in to the overflow channels 115a, 115b using the wiper 109. This may be carried out in conjunction with staged raising of the build platform to control an amount of powder that is available for the wiper 109 to push into the channels 115a, 115b on each stroke.

In addition, a velocity of the gas knife may be increased during the de-build by appropriate control of the pump 117 to facilitate removal of powder from the object 124. The mechanical manipulator 105 may be further rotated and carry out sudden halts to knock/vibrate powder from the object and to pass the object through the gas knife at different orientations.

The recovered powder is conveyed to the cyclone separator 119 through the gas circuit 116 by the gas flow, the cyclone separator separating powder from the gas flow such that the recovered powder is returned to the hopper 110.

The exhaust manifold 115d further comprises an inlet 115e for feeding powder to the system.

An advantage of the powder bed fusion apparatus is that gas-borne powder, the excess powder and the recovered powder are all conveyed back to the hopper 110 for reuse using the same conveying mechanism, which is also used for generating the gas knife. A separate conveying system in addition to the gas circuit is not required as the gas flow itself is used for conveying powder to the hopper. Use of this system in conjunction with a mechanical manipulator 105 provides for automation of the recovery of powder from the powder bed 123 to the hopper 110.

Furthermore, powder is returned to the hopper 110 without removing the powder from the inert atmosphere mitigating problems with systems that remove powder from the machine, for example in removable build sleeves, in that the powder needs to be returned to the powder bed fusion apparatus without exposure to air. However, in a further embodiment, powder separated out by the cyclone 119 is deposited into a container separate to the hopper 110 used for dosing powder such that the powder can be checked before use in a subsequent build. For example, it may be desirable to check the powder for contamination and/or to determine if the powder has a required particle size distribution. This check of the powder may be carried out with the container remaining on the machine or when the container has been removed from the machine, for example to a powder handling facility. Adjustment to the powder, such as adjustment to the particle size distribution may also be carried out on or off the machine, for example by mixing the powder in the container with powder provided from another source. This mixed powder may then be returned to the hopper 110 of the powder bed fusion apparatus for use in a subsequent build.

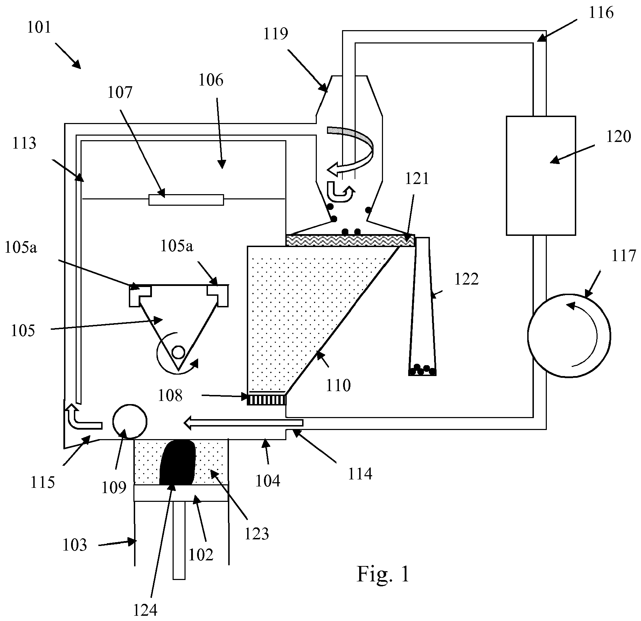

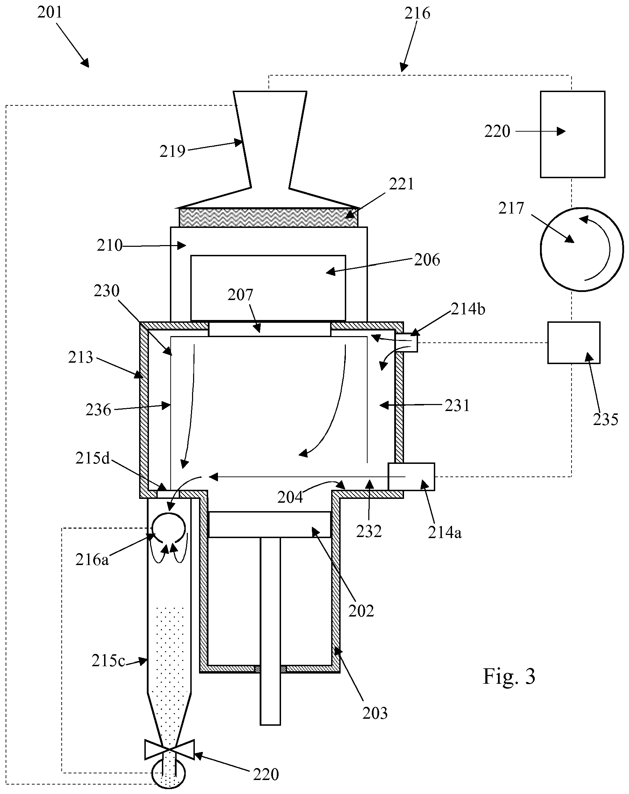

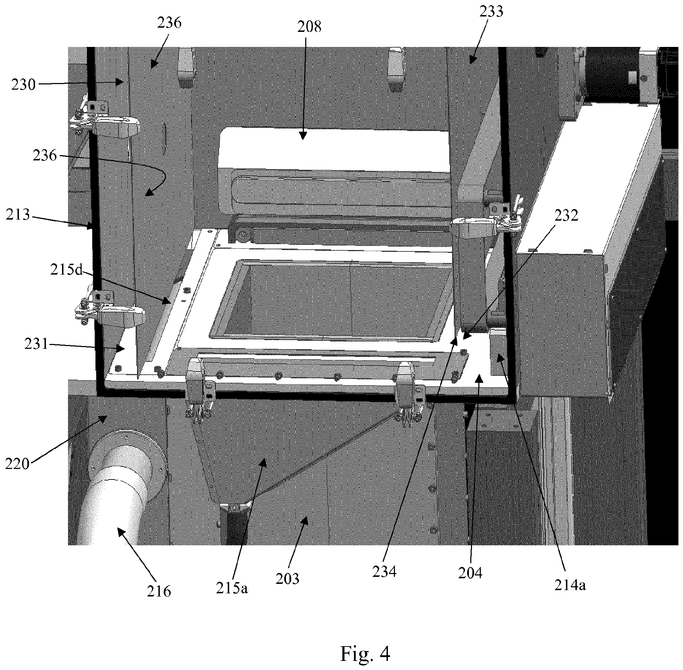

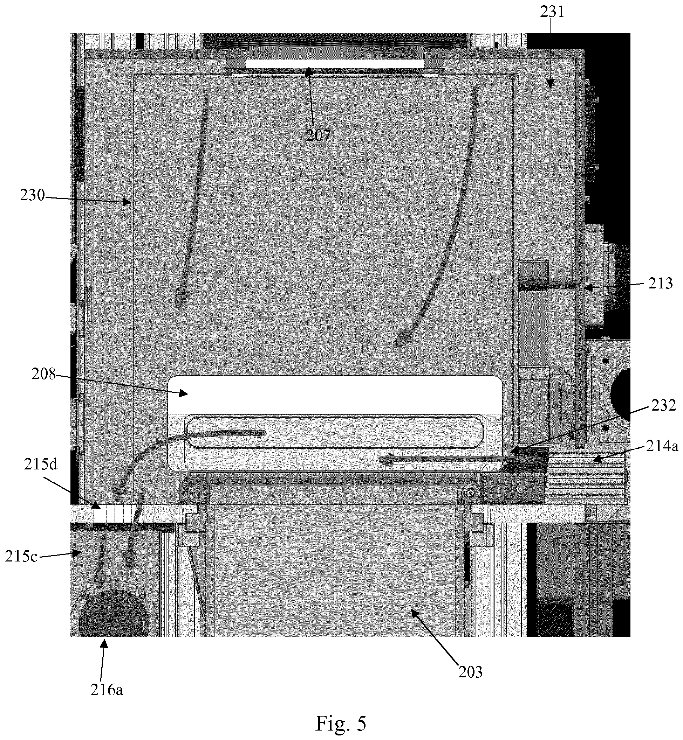

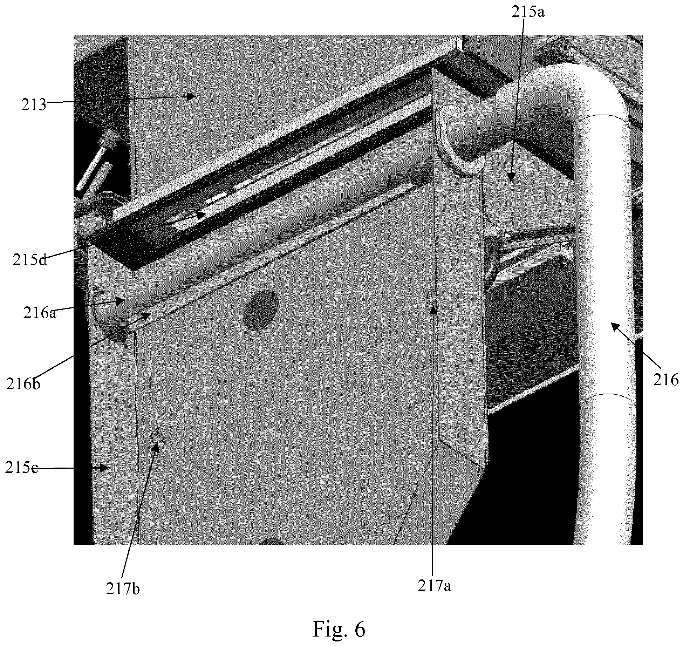

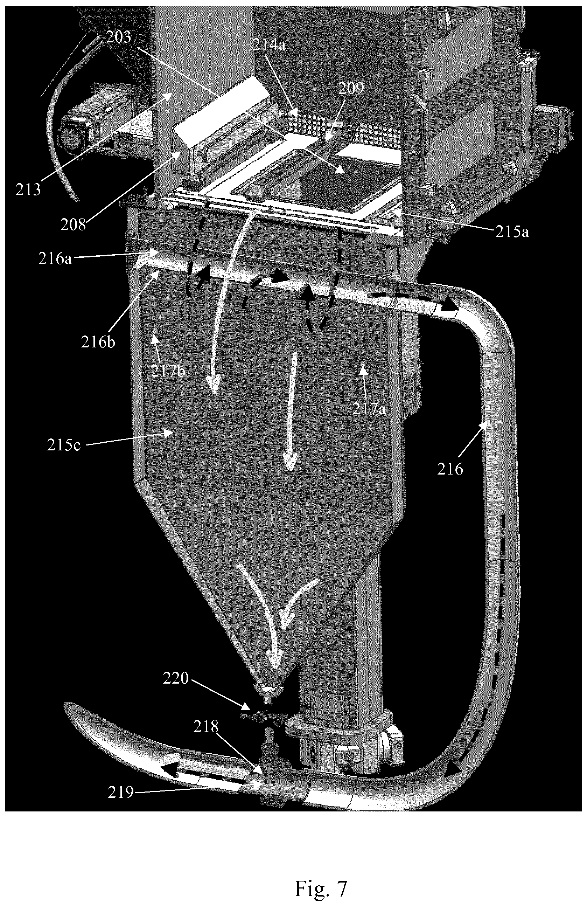

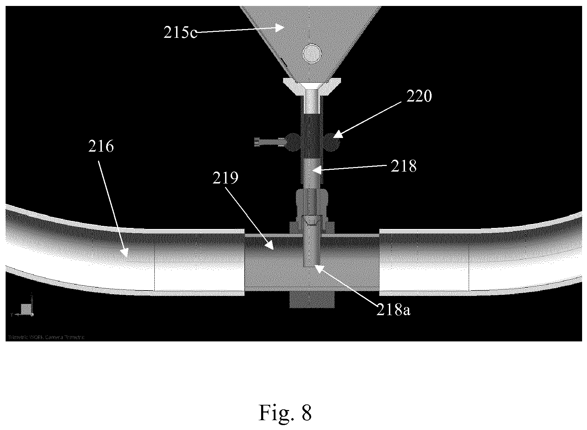

A further embodiment of the invention will now be described with reference to Figures 3 to 8. The same reference numerals but in the series 200 are used to refer to features of this further embodiment that correspond to features of the previous embodiment described with reference to Figures 1 and 2. Only features of the further embodiment that differ from the embodiment described with reference to Figures 1 and 2 will be described below. For the remaining features, reference is made to the above description of these features made with reference to Figures 1 and 2.

In the further embodiment, an insert 230 is provided in the build chamber 213 to form a plenum chamber 231 between an outer surface of the insert 230 and the inner surface of the build chamber 213. A top wall of the insert 230, which defines a ceiling, comprises an array of apertures therein (not shown) for allowing gas to flow from the plenum chamber 231 into the central, major volume enclosed by the build chamber 213 and the insert 230. Sidewall 233 of the insert 230 has a lower end 234 that is spaced from a floor/lower surface 204 of the build chamber 231 to define a gap 232 for high velocity gas, delivered through lower gas nozzle 214a to flow across the working surface/powder bed. An upper gas inlet 214b delivers gas into an upper region of the plenum chamber 231.

A flow regulator 235 controls the flow of the inert gas to the two gas inlets 214a and 214b.

In this embodiment, the gas exhaust/opening 215d is provided in a floor (processing plate) 204 of the build chamber 213 for receiving both gas and powder wiped from the powder bed and/or build platform 102. A sidewall 236 of the insert 230 extends to the floor 104 to intersect the gas exhaust 215d such that particles carried to the exhaust/opening 215d by the gas flow and powder displaced to the exhaust/opening 215d by the wiper 209 are carried into/fall into the gas exhaust 215d. Like the first embodiment, two overflow channels (only one 215a is shown) are provided either side the build sleeve 203 in the direction of movement of the wiper 209 for collecting excess powder. The exhaust 215d and overflow channels 215a are connected to a collection hopper 215c.

Extending into a top section of the collection hopper 215c is a gas conduit 216a. In this embodiment, the gas conduit 216a extends across the entire width of the collection hopper 215c. The gas conduit comprises a pipe having a downwardly facing aperture 216b. In this way, the gas flow is sucked into the gas conduit 216a through the aperture 216b (as indicated by the dotted arrows) whilst the majority of the powder particles fall into a lower section of the collection hopper 215c (as indicated by the solid arrows). Accordingly, gas flow is not inhibited by powder collected in the collection hopper 215c (an upper surface of the powder collected in the collection hopper remaining below the aperture 216b).

Powder from the overflow channels 215a, 215b flows into the collection hopper 215c through inlets 217a and 217b.

A bottom of the hopper 215c leads to a feed pipe 218 for feeding the powder back into the gas flow circuit 216. The feed pipe 218 extends into a gas conduit pipe 219 of the gas circuit 216 such that an outlet 218a of the feed pipe 218 is located within the gas conduit pipe 219. Preferably the outlet 218a is located such that powder dispensed from the outlet 218a can form a heap in the conduit pipe 219, which will eventually block the outlet 218a before filling the pipe with powder. In this way, gas can be introduced into the conduit pipe 219 to be entrained in the gas flow but is prevented from filling the pipe and blocking the conduit pipe 219.

A valve 220 is actuatable to control the rate of powder flow though the feed pipe 218. The valve 220 comprises a clamp that can be adjusted to constrict the feed pipe 218 to varying degrees. The clamp may be manually operable or motorised such that it can be adjusted in process under the control of a controller (not shown). Like the previous embodiment, the powder entrained in the gas flow is carried to a cyclone, which separates the powder from the gas flow and deposits the powder onto a sieve 221. The sieve 221 separates out the oversized particles, with the remaining in powder dropping into dispense hopper 210 for use in the build. The gas is then recirculated back to lower and upper inlet nozzles 214a and 214b to generate the gas flow through the build chamber 213. In this way, the same gas flow circuit is used for generating the gas flow through the build chamber 213 and for transporting the powder to the dispense hopper 210.

At the end of a build, the part is raised up by the build platform 202 out of the build sleeve 203. Like the first embodiment, the apparatus may further comprise a mechanical manipulator (not shown) arranged to engage with a build substrate, to which the object is attached, to tilt the object in a raised position above the working plane such that powder is freed from the object and deposited at a location above the working plane and into the build volume. During freeing of unconsolidated powder from the object (with or without a mechanical manipulator), the gas flow from lower inlet nozzle 214a may be increased and the gas flow through upper inlet nozzle 214b reduced or even stopped altogether in order to increase the velocity of gas from nozzle 214a. This high velocity gas may act to blow powder from the object. Rather than adjusting the pump speed or in addition to adjusting the pump speed, the flow regulator 235 is operated to alter the ratio of gases flowing to the lower and upper gas nozzles 214a, 214b. In addition or alternatively, the lower gas nozzle 214a may comprise a shutter (not shown) for reducing a size of the aperture(s) in the lower gas flow nozzle 214a, thereby increasing the gas flow therefrom.

Modifications may be made to the above described embodiments without departing from the scope of invention as defined in the claims. For example, powder may be displaced to the exhaust channels 115a. 115b using vibrations of the build platform 102 and/or the surfaces 104 surrounding the build platform 102.

## Claims

1. A powder bed fusion apparatus comprising a build chamber (113, 213); a build platform (102, 202) in the build chamber (113, 213) for supporting a powder bed (123); a layer formation device (108, 109, 110; 208, 209, 210) for forming layers of powder in a working plane to form the powder bed (123), the layer formation device comprising a hopper (110, 210) from which powder is dosed in a controlled manner to be formed into the layers; a scanner (106, 206) for scanning an energy beam across the powder bed (123) to fuse the powder; and a gas circuit (116, 216) for forming a gas flow across the powder bed (123), the gas circuit (116, 216) comprising a separator (119, 219) for separating particles from gas in the gas circuit (116, 216), a nozzle (114, 214) in fluid communication with the build chamber (113, 213) for propelling gas into the build chamber (113, 213), an exhaust (115, 215) in fluid communication with the build chamber (113, 213) for extracting gas from the build chamber (113, 213) and delivering the gas to the separator (119, 219) and a pump (117, 217) for pumping gas around the gas circuit (116, 216) such that the nozzle (114, 214) propels gas into the build chamber (113, 213) and the gas exhaust (115, 215) extracts gas from the build chamber (113, 213) to generate the gas flow across the working plane, **characterised in that** the separator (119, 219) is located above the hopper (110) such that powder falls from the separator (119, 219) into the hopper (110, 210), and the exhaust (115, 215) comprises an exhaust channel or opening (115a, 115b, 215a, 215b, 215d) located at or below the working plane for receiving powder wiped from the powder bed (123) and/or the build platform (102, 202) such that the gas flow acts, in the build chamber (113, 213), as a gas knife for maintaining the atmosphere in the build chamber (113, 213) free from gas borne particles and, in the gas circuit (116, 216), as a powder conveyor for conveying the powder received in the exhaust channel or opening (115a, 115b, 215a, 215b, 215d) to the separator (119, 219) for subsequent dispense.

2. The powder bed fusion apparatus according to claim 1, wherein the exhaust channel or opening (115a, 115b, 215a, 215b, 215d) is located to receive powder conveyed from the powder bed (123) along a surface (104, 204) surrounding the powder bed (123).

3. The powder bed fusion apparatus according to claim 1 or claim 2, wherein the exhaust channel or opening (115a, 115b, 215a, 215b, 215d) is located such that powder displaced from the powder bed (123) falls and/or flows into the exhaust channel or opening (115a, 115b, 215a, 215b, 215d).

4. The powder bed fusion apparatus according to any one of claims 1 to 3, comprising mechanical means (109, 209) for wiping the powder into the exhaust channel or opening (115a, 115b, 215a, 215b, 215d).

5. The powder bed fusion apparatus according to claim 4, wherein the layer formation device (108, 109, 208, 209) comprises a wiper (109, 209) for spreading each layer and the exhaust channel or opening (115a, 115b, 215a, 215b, 215d) is located such that the wiper (109, 209) pushes powder from the powder bed (123) into the exhaust channel or opening (115a, 115b, 215a, 215b, 215d)

6. The powder bed fusion apparatus according to claim 5, wherein the exhaust channel or opening (115a, 115b, 215a, 215b, 215d) is located on a side of the powder bed to which the wiper (109, 209) pushes the powder.

7. The powder bed fusion apparatus according to claim 5 or claim 6, wherein the wiper (109, 209) moves in a direction perpendicular to a gas flow direction through the build chamber (113, 213).

8. The powder bed fusion apparatus according to any one of claims 5 to 7, wherein the exhaust (115, 215) comprises a first exhaust channel or opening (115a, 115b, 215a, 215b) located to be one side of the powder bed (123) and a second exhaust channel or opening (115a, 115b, 215a, 215b) located to be another side of the powder bed (123).

9. The powder bed fusion apparatus according to any one of claims 5 to 8, comprising an end effector (105) in the build chamber (113, 213) to pick the object up and elevate it above the build platform (102, 202) such that powder freed from the object can be pushed by the wiper (109, 209) into the exhaust channel or opening (115a, 115b, 215a, 215b, 215d).

10. The powder bed fusion apparatus according to any one of claims 1 to 8, comprising an end effector (105) in the build chamber (113, 213) to pick the object up and elevate it above the build platform (102, 202) such that powder freed from the object can be pushed by an operator from the build platform (102, 202) into the exhaust channel or opening (115a, 115b, 215a, 215b, 215d).

11. The powder bed fusion apparatus according to any one of the preceding claims, wherein a bottom of the exhaust channel (115a, 115b, 215a, 215b) is angled relative to the horizontal such that powder flows along the exhaust channel (115a, 115b, 215a, 215b) to be carried away by the gas flow in the gas circuit (116, 216), wherein an angle of the bottom of the channel (115a, 115b, 215a, 215b) is greater than an angle of repose of the powder.

12. The powder bed fusion apparatus according to any one of the preceding claims, wherein the exhaust comprises an opening (115d) that extends above the powder bed (123) for generating the gas flow across the powder bed (123).

13. The powder bed fusion apparatus according to any one of the preceding claims, wherein the hopper (110, 210) is arranged to dose powder into the build chamber (113, 213) from above the working plane in which the layer formation device (108, 109, 110; 208, 209, 210) forms layers of powder.

14. The powder bed fusion apparatus according to any one of the preceding claims, comprising a collection hopper (215c) for collecting powder wiped from the powder bed and/or build platform (202) into the exhaust (215), the collection hopper (215c) comprising a gas outlet (216b) in an upper section thereof and a powder outlet (218a) below the gas outlet (216b); a gas conduit (216a, 216, 219) connected to the gas outlet (216b) for transporting gas back to the nozzle (214), the powder outlet (218a) arranged to feed powder into the gas conduit (216a, 216, 219) such that the powder is entrained in the gas flow and transported to the separator (219).

15. The powder bed fusion apparatus according to any one of the preceding claims wherein the exhaust channel or opening (115a, 115b, 215a, 215b, 215d) is provided in a floor (104, 204) of the build chamber (113, 213).

## Patentansprüche

1. Pulverbettschmelzvorrichtung mit einer Baukammer (113, 213), einer Bauplattform (102, 202) in der Baukammer (113, 213) zum Tragen eines Pulverbettes (123); einer Schichtbildungsvorrichtung (108, 109, 110; 208, 209, 210) zum Bilden von Pulverschichten in einer Arbeitsebene, um das Pulverbett (123) zu bilden, wobei die Schichtbildungsvorrichtung einen Trichter (110, 210) umfasst, aus dem Pulver in gesteuerter Weise dosiert wird, um in die Schichten geformt zu werden; einer Abtasteinrichtung (106, 206) zum Abtasten eines Energiestrahls über das Pulverbett (123), um das Pulver zu schmelzen; und einem Gaskreislauf (116, 216) zum Bilden eines Gasstroms über das Pulverbett (123), wobei der Gaskreislauf (116, 216) einen Abscheider (119, 219) zum Trennen von Partikeln von Gas in dem Gaskreislauf (116, 216), eine Düse (114, 214) in Fluidverbindung mit der Baukammer (113, 213) zum Treiben von Gas in die Baukammer (113, 213), einen Auslass (115, 215), der in Fluidverbindung mit der Baukammer (113, 213) steht, um Gas aus der Baukammer (113, 213) zu entnehmen und das Gas an den Separator (119, 219) zu liefern, und eine Pumpe (117, 217) umfasst, um Gas um den Gaskreislauf (116, 216) zu pumpen, so dass die Düse (114, 214) Gas in die Baukammer (113, 213) treibt und der Gasauslass (115, 215) Gas aus der Baukammer (113, 213) entnimmts, um den Gasstrom über die Arbeitsebene zu erzeugen, **dadurch gekennzeichnet, dass** der Abscheider (119, 219) oberhalb des Trichters (110) angeordnet ist, so dass Pulver aus dem Abscheider (119, 219) in den Trichter (110, 210) fällt, und der Auslass (115, 215) einen Auslasskanal oder eine Auslassöffnung (115a, 115b, 215a, 215b, 215d) umfasst, der/die an oder unterhalb der Arbeitsebene angeordnet ist, um vom Pulverbett (123) und/oder der Aufbauplattform (102, 202) gewischtes Pulver aufzunehmen, so dass der Gasstrom in der Baukammer (113, 213) als ein Gasmesser wirkt, um die Atmosphäre in der Baukammer (113, 213) frei von gasgetragenen Partikeln zu halten, und im Gaskreislauf (116, 216) als Pulverförderer wirkt, um das im Auslasskanal oder in der Auslassöffnung (115a, 115b, 215a, 215b, 215d) aufgenommene Pulver zum Abscheider (119, 219) zur anschließenden Abgabe zu befördern.

2. Pulverbettschmelzvorrichtung nach Anspruch 1, wobei der Auslasskanal oder die Auslassöffnung (115a, 115b, 215a, 215b, 215d) so angeordnet ist, dass er/sie Pulver aufnimmt, das vom Pulverbett (123) entlang einer das Pulverbett (123) umgebenden Oberfläche (104, 204) gefördert wird.

3. Pulverbettschmelzvorrichtung nach einem der Ansprüche 1 oder 2, wobei der Auslasskanal oder die Auslassöffnung (115a, 115b, 215a, 215b, 215d) so angeordnet ist, dass das aus dem Pulverbett (123) verdrängte Pulver in den Auslasskanal oder die Auslassöffnung (115a, 115b, 215a, 215b, 215d) fällt und/oder fließt.

4. Pulverbettschmelzvorrichtung nach einem der Ansprüche 1 bis 3, mit einem mechanischen Mittel (109, 209) zum Wischen des Pulvers in den Auslasskanal oder die Auslassöffnung (115a, 115b, 215a, 215b, 215d).

5. Pulverbettschmelzvorrichtung nach Anspruch 4, wobei die Schichtbildungsvorrichtung (108, 109, 208, 209) einen Wischer (109, 209) zum Verteilen jeder Schicht umfasst und der Auslasskanal oder die Auslassöffnung (115a, 115b, 215a, 215b, 215d) so angeordnet ist, dass der Wischer (109, 209) Pulver aus dem Pulverbett (123) in den Auslasskanal oder die Auslassöffnung (115a, 115b, 215a, 215b, 215d) drückt.

6. Pulverbettschmelzvorrichtung nach Anspruch 5, wobei der Auslasskanal oder die Auslassöffnung (115a, 115b, 215a, 215b, 215d) auf einer Seite des Pulverbettes angeordnet ist, zu der der Wischer (109, 209) das Pulver drückt.

7. Pulverbettschmelzvorrichtung nach einem der Ansprüche 5 oder 6, wobei sich der Wischer (109, 209) in einer Richtung senkrecht zu einem Gasstrom durch die Baukammer (113, 213) bewegt.

8. Pulverbettschmelzvorrichtung nach einem der Ansprüche 5 bis 7, wobei der Auslass (115, 215) einen ersten Auslasskanal oder eine erste Auslassöffnung (115a, 115b, 215a, 215b), der/die auf einer Seite des Pulverbettes (123) angeordnet ist, und einen zweiten Auslasskanal oder eine zweite Auslassöffnung (115a, 115b, 215a, 215b) umfasst, der/die auf einer anderen Seite des Pulverbettes (123) angeordnet ist.

9. Pulverbettschmelzvorrichtung nach einem der Ansprüche 5 bis 8, mit einem Endeffektor (105) in der Baukammer (113, 213), um das Objekt aufzunehmen und es über die Bauplattform (102, 202) zu heben, so dass das von dem Objekt befreite Pulver durch den Wischer (109, 209) in den Auslasskanal oder die Auslassöffnung (115a, 115b, 215a, 215b, 215d) gedrückt werden kann.

10. Pulverbettschmelzvorrichtung nach einem der Ansprüche 1 bis 8, mit einem Endeffektor (105) in der Baukammer (113, 213), um das Objekt aufzunehmen und es über die Bauplattform (102, 202) anzuheben, so dass das von dem Objekt befreite Pulver von einem Bediener von der Bauplattform (102, 202) in den Auslasskanal oder die Auslassöffnung (115a, 115b, 215a, 215b, 215d) gedrückt werden kann.

11. Pulverbettschmelzvorrichtung nach einem der vorhergehenden Ansprüche, wobei ein Boden des Auslasskanals (115a, 115b, 215a, 215b) relativ zur Horizontalen so angewinkelt ist, dass Pulver entlang des Auslasskanals (115a, 115b, 215a, 215b) fließt, um von dem Gasstrom in dem Gaskreislauf (116, 216) weggetragen zu werden, wobei ein Winkel des Bodens des Kanals (115a, 115b, 215a, 215b) größer als ein Schüttwinkel des Pulvers ist.

12. Pulverbettschmelzvorrichtung nach einem der vorhergehenden Ansprüche, wobei der Auslass eine Öffnung (115d) umfasst, die sich über dem Pulverbett (123) erstreckt, um den Gasstrom über das Pulverbett (123) zu erzeugen.

13. Pulverbettschmelzvorrichtung nach einem der vorhergehenden Ansprüche, wobei der Trichter (110, 210) so angeordnet ist, dass er Pulver von oberhalb der Arbeitsebene, in der die Schichtbildungsvorrichtung (108, 109, 110; 208, 209, 210) Pulverschichten bildet, in die Baukammer (113, 213) dosiert.

14. Pulverbettschmelzvorrichtung nach einem der vorhergehenden Ansprüche, mit einem Sammeltrichter (215c) zum Sammeln von aus dem Pulverbett und/oder der Aufbauplattform (202) in den Auslass (215) gewischtem Pulver, wobei der Sammeltrichter (215c) in seinem oberen Abschnitt einen Gasauslass (216b) und unterhalb des Gasauslasses (216b) einen Pulverauslass (218a) aufweist, und einer Gasleitung (216a, 216, 219), die mit dem Gasauslass (216b) verbunden ist, um Gas zurück zur Düse (214) zu transportieren, wobei der Pulverauslass (218a) so angeordnet ist, dass er Pulver in die Gasleitung (216a, 216, 219) zuführt, so dass das Pulver in dem Gasstrom mitgeführten und zu dem Abscheider (219) transportiert wird.

15. Pulverbettschmelzvorrichtung nach einem der vorhergehenden Ansprüche, wobei der Auslasskanal oder die Auslassöffnung (115a, 115b, 215a, 215b, 215d) in einem Boden (104, 204) der Baukammer (113, 213) vorgesehen ist.

## Revendications

1. Appareil de fusion à lit de poudre comprenant une chambre de construction (113, 213) ; une plate-forme de construction (102, 202) dans la chambre de construction (113, 213) pour supporter un lit de poudre (123) ; un dispositif de formation de couches (108, 109, 110 ; 208, 209, 210) pour former des couches de poudre dans un plan de travail pour former le lit de poudre (123), le dispositif de formation de couches comprenant une trémie (110, 210) depuis laquelle une poudre est dosée d'une manière régulée pour prendre la forme des couches; un dispositif de balayage (106, 206) pour balayer un faisceau d'énergie à travers le lit de poudre (123) pour faire fondre la poudre ; et un circuit de gaz (116, 216) pour former un écoulement de gaz à travers le lit de poudre (123), le circuit de gaz (116, 216) comprenant un séparateur (119, 219) pour séparer des particules d'un gaz dans le circuit de gaz (116, 216), une buse (114, 214) en communication fluidique avec la chambre de construction (113, 213) pour propulser un gaz dans la chambre de construction (113, 213), une évacuation (115, 215) en communication fluidique avec la chambre de construction (113, 213) pour extraire un gaz de la chambre de construction (113, 213) et fournir le gaz au séparateur (119, 219) et une pompe (117, 217) pour pomper un gaz autour du circuit de gaz (116, 216) de sorte que la buse (114, 214) propulse un gaz dans la chambre de construction (113, 213) et l'évacuation de gaz (115, 215) extrait un gaz de la chambre de construction (113, 213) pour générer l'écoulement de gaz à travers le plan de travail, **caractérisé en ce que** le séparateur (119, 219) est situé au-dessus de la trémie (110) de sorte qu'une poudre tombe du séparateur (119, 219) dans la trémie (110, 210), et l'évacuation (115, 215) comprend un canal ou une ouverture d'évacuation (115a, 115b, 215a, 215b, 215d) situé au niveau ou au-dessous du plan de travail pour recevoir une poudre raclée du lit de poudre (123) et/ou de la plate-forme de construction (102, 202) de sorte que l'écoulement de gaz agisse, dans la chambre de construction (113, 213), en tant qu'une lame à gaz pour maintenir l'atmosphère dans la chambre de construction (113, 213) dépourvue de particules en suspension dans le gaz et, dans le circuit de gaz (116, 216), en tant qu'un transporteur de poudre pour transporter la poudre reçue dans le canal ou l'ouverture d'évacuation (115a, 115b, 215a, 215b, 215d) jusqu'au séparateur (119, 219) pour sa distribution ultérieure.

2. Appareil de fusion à lit de poudre selon la revendication 1, dans lequel le canal ou l'ouverture d'évacuation (115a, 115b, 215a, 215b, 215d) est situé pour recevoir une poudre transportée depuis le lit de poudre (123) le long d'une surface (104, 204) entourant le lit de poudre (123).

3. Appareil de fusion à lit de poudre selon la revendication 1 ou 2, dans lequel le canal ou l'ouverture d'évacuation (115a, 115b, 215a, 215b, 215d) est situé de sorte qu'une poudre déplacée depuis le lit de poudre (123) tombe et/ou s'écoule dans le canal ou l'ouverture d'évacuation (115a, 115b, 215a, 215b, 215d).

4. Appareil de fusion à lit de poudre selon l'une quelconque des revendications 1 à 3, comprenant des moyens mécaniques (109, 209) pour racler la poudre dans le canal ou l'ouverture d'évacuation (115a, 115b, 215a, 215b, 215d).

5. Appareil de fusion à lit de poudre selon la revendication 4, dans lequel le dispositif de formation de couches (108, 109, 208, 209) comprend un racleur (109, 209) pour étaler chaque couche et le canal ou l'ouverture d'évacuation (115a, 115b, 215a, 215b, 215d) est situé de sorte que le racleur (109, 209) pousse une poudre depuis le lit de poudre (123) dans le canal ou l'ouverture d'évacuation (115a, 115b, 215a, 215b, 215d).

6. Appareil de fusion à lit de poudre selon la revendication 5, dans lequel le canal ou l'ouverture d'évacuation (115a, 115b, 215a, 215b, 215d) est situé sur un côté du lit de poudre vers lequel le racleur (109, 209) pousse la poudre.

7. Appareil de fusion à lit de poudre selon la revendication 5 ou 6, dans lequel le racleur (109, 209) se déplace dans une direction perpendiculaire à une direction d'écoulement de gaz à travers la chambre de construction (113, 213).

8. Appareil de fusion à lit de poudre selon l'une quelconque des revendications 5 à 7, dans lequel l'évacuation (115, 215) comprend un premier canal ou ouverture d'évacuation (115a, 115b, 215a, 215b) situé pour être sur un côté du lit de poudre (123) et un second canal ou ouverture d'évacuation (115a, 115b, 215a, 215b) situé pour être sur un autre côté du lit de poudre (123).

9. Appareil de fusion à lit de poudre selon l'une quelconque des revendications 5 à 8, comprenant un effecteur terminal (105) dans la chambre de construction (113, 213) pour prendre l'objet et le soulever au-dessus de la plate-forme de construction (102, 202) de sorte qu'une poudre libérée de l'objet puisse être poussée par le racleur (109, 209) dans le canal ou l'ouverture d'évacuation (115a, 115b, 215a, 215b, 215d).

10. Appareil de fusion à lit de poudre selon l'une quelconque des revendications 1 à 8, comprenant un effecteur terminal (105) dans la chambre de construction (113, 213) pour prendre l'objet et le soulever au-dessus de la plate-forme de construction (102, 202) de sorte qu'une poudre libérée de l'objet puisse être poussée par un opérateur depuis la plate-forme de construction (102, 202) dans le canal ou l'ouverture d'évacuation (115a, 115b, 215a, 215b, 215d).

11. Appareil de fusion à lit de poudre selon l'une quelconque des revendications précédentes, dans lequel un fond du canal d'évacuation (115a, 115b, 215a, 215b) est incliné par rapport à l'horizontale de sorte qu'une poudre s'écoule le long du canal d'évacuation (115a, 115b, 215a, 215b) pour être emportée par l'écoulement de gaz dans le circuit de gaz (116, 216), dans lequel un angle du fond du canal (115a, 115b, 215a, 215b) est supérieur à un angle de talus de la poudre.

12. Appareil de fusion à lit de poudre selon l'une quelconque des revendications précédentes, dans lequel l'évacuation comprend une ouverture (115d) qui s'étend au-dessus du lit de poudre (123) pour générer l'écoulement de gaz à travers le lit de poudre (123).

13. Appareil de fusion à lit de poudre selon l'une quelconque des revendications précédentes, dans lequel la trémie (110, 210) est agencée pour doser une poudre dans la chambre de construction (113, 213) par dessus le plan de travail dans lequel le dispositif de formation de couches (108, 109, 110 ; 208, 209, 210) forme des couches de poudre.

14. Appareil de fusion à lit de poudre selon l'une quelconque des revendications précédentes, comprenant une trémie de collecte (215c) pour collecter une poudre raclée depuis le lit de poudre et/ou la plate-forme de construction (202) dans l'évacuation (215), la trémie de collecte (215c) comprenant une sortie de gaz (216b) dans une section supérieure de celle-ci et une sortie de poudre (218a) au-dessous de la sortie de gaz (216b) ; un conduit de gaz (216a, 216, 219) relié à la sortie de gaz (216b) pour ramener le gaz vers la buse (214), la sortie de poudre (218a) étant agencée pour approvisionner une poudre dans le conduit de gaz (216a, 216, 219) de sorte que la poudre soit entraînée dans l'écoulement de gaz et emmenée jusqu'au séparateur (219).

15. Appareil de fusion à lit de poudre selon l'une quelconque des revendications précédentes, dans lequel le canal ou l'ouverture d'évacuation (115a, 115b, 215a, 215b, 215d) est prévu dans un plancher (104, 204) de la chambre de construction (113, 213).
